# EUROPÄISCHE PATENTANMELDUNG

(11) **EP 3 257 571 A1**
(43) Veröffentlichungstag der Anmeldung: **20.12.2017**
(21) Anmeldenummer: 16174127.7
(22) Anmeldetag: 13.06.2016
(51) Int. Cl.: B01D 53/94, B01J 23/63, B01J 23/656, F01N 3/08

(54) **PARTIKELFILTER MIT INTEGRIERTER NOX-SPEICHER- UND H2S-SPERRFUNKTION**

(71) Anmelder: Umicore AG & Co. KG, 63457 Hanau-Wolfgang (DE)
(72) Erfinder: DORNHAUS, Franz, Higashinada-ku, Kobe, 658-0063 (JP); SCHIFFER, Michael, 63450 Hanau (DE); HOYER, Ruediger, 63755 Alzenau-Hoerstein (DE); UTSCHIG, Thomas, 60598 Frankfurt am Main (DE)

(57) **Zusammenfassung**

Die vorliegende Erfindung betrifft einen Katalysator, der ein Wandflussfilter der Länge L und Materialzonen A und B umfasst, wobei Materialzone A Ceroxid, eine Erdalkaliverbindung und/oder eine Alkaliverbindung, sowie Platin und/oder Palladium und Materialzone B eine Manganverbindung, sowie Platin und/oder Palladium enthalten.

## Beschreibung

Die vorliegende Erfindung betrifft einen Katalysator zur Reinigung von Abgas von mager betriebenen Verbrennungsmotoren.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoff-haltigen FeststoffTeilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOR" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Rußpartikel können sehr effektiv mit Hilfe von Partikelfiltern aus dem Abgas entfernt werden. Besonders bewährt haben sich Wandflussfilter aus keramischen Materialien. Diese sind aus einer Vielzahl von parallelen Kanälen aufgebaut, die durch poröse Wände gebildet werden. Die Kanäle sind wechselseitig an einem der beiden Enden des Filters gasdicht verschlossen, so dass erste Kanäle gebildet werden, die an der ersten Seite des Filters offen und auf der zweiten Seite des Filters verschlossen sind, sowie zweite Kanäle, die an der ersten Seite des Filters verschlossen und auf der zweiten Seite des Filters offen sind. Das beispielsweise in die ersten Kanäle einströmende Abgas kann den Filter nur über die zweiten Kanäle wieder verlassen und muss zu diesem Zweck durch die porösen Wände zwischen den ersten und zweiten Kanälen durchfließen. Beim Durchtritt des Abgases durch die Wand werden die Partikel zurückgehalten.

Es ist bekannt, dass Partikelfilter mit katalytisch aktiven Beschichtungen versehen werden können. So beschreibt beispielsweise die EP1820561 A1 die Beschichtung eines Dieselpartikelfilters mit einer Katalysatorschicht, die das Abbrennen der gefilterten Rußpartikel erleichtert.

Zur Entfernung der Stickoxide sind sogenannte Stickoxid-Speicherkatalysatoren, für die auch der Begriff "Lean NOx Trap" oder LNT üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.
Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu NO₂, sowie CO und HC zu CO₂ und H₂O zu oxidieren und andererseits während der fetten Betriebsphasen, in denen der Stickoxid-Speicherkatalysator regeneriert wird, freigesetztes NO₂ zu Stickstoff zu reduzieren.

Moderne Stickoxid-Speicherkatalysatoren sind beispielsweise in EP0885650 A2, US2009/320457, WO2012/029050 A1 und WO2016/020351 A1 beschrieben.

Es ist bereits bekannt, Rußpartikelfilter und Stickoxid-Speicherkatalysatoren zu kombinieren. So beschreiben beispielsweise die EP1420 149 A2, die WO2011/110837 A1 und die US2008/141661 Systeme aus einem Dieselpartikelfilter und einem abströmseitig angeordneten Stickoxid-Speicherkatalysator.

Darüber hinaus ist bereits in beispielsweise DE10261620 A1, EP1393069 A2, EP1433519 A1, EP2505803 A2, US2014/322112 und WO2013/007468 A1 vorgeschlagen worden, Partikelfilter mit Stickoxid-Speicherkatalysatoren zu beschichten.
Die US2014/322112 beschreibt eine Zonierung der Beschichtung des Partikelfilters mit Stickoxid-Speicherkatalysator dergestalt, dass sich eine Zone ausgehend vom anströmseitigen Ende des Partikelfilters in den Eingangskanälen und eine andere Zone ausgehend vom abströmseitigen Ende des Partikelfilters in den Ausgangskanälen befindet. Sowohl die Beladung mit Washcoat, als auch die mit Edelmetall ist in der anströmseitigen Zone höher als in der abströmseitigen Zone.

Speichermaterialien für Stickoxide reagieren aber auch mit anderen sauren Oxiden im Abgas. Problematisch ist dabei insbesondere, dass aus Schwefelkomponenten im Kraftstoff entstandenes Schwefeldioxid am Edelmetallkatalysator zu Schwefeltrioxid oxidiert und vom Speichermaterial als Sulfat gebunden wird. Da Schwefeltrioxid deutlich saurere Eigenschaften als Stickoxide besitzt, ist beispielsweise bei Verwendung von Barium als Speichermaterial die Bildung von Bariumsulfat der Bildung von Bariumnitrat bevorzugt.

Moderne Dieselkraftstoffe weisen zwar einen geringen Schwefelgehalt auf, dennoch muss der Stickoxidspeicherkatalysator von Zeit zu Zeit entschwefelt werden. Dabei entstehen normalerweise erhebliche Mengen an Schwefelwasserstoff, der schon wegen seines üblen Geruches nicht in die Umwelt gelangen soll.
Abhilfe schaffen sogenannte Schwefelwasserstoff-Sperrkatalysatoren, die an sich bekannt und beispielsweise in US 5,008,090, JP2,191,529 und DE19813654A1 beschrieben sind. Diese Dokumente beschreiben insbesondere Metalle, die unter fetten Bedingungen stabile Sulfide bilden können. Solche Metalle sind zum Beispiel Nickel, Kupfer, Kobalt, Blei, Zink, Eisen, Chrom, Mangan und Germanium. Neben diesen Sulfidfängern wird in der Regel auch ein Platingruppenmetall eingesetzt.
Die EP2275194A1 beschreibt auch bereits einen Partikelfilter mit einer Schwefelwasserstoff-Sperrfunktion, wobei als Sulfidfänger Kupfer verwendet wird.
Aus der WO2014/080220 ist auch bereits die Verwendung von Manganoxid (MnO₂) zur Kontrolle der Schwefelwasserstoff-Emissionen bekannt. Dabei werden Manganoxid und Edelmetall in einer Beschichtung auf das Trägersubstrat aufgebracht.

Abgasnachbehandlungssysteme für die Gesetzgebungsstufe Euro 6c und nachfolgende Gesetzgebungen müssen in einem weiten Betriebsbereich hinsichtlich Temperatur, Abgasmassenstrom und Stickoxid-Massenstrom, besonders hinsichtlich Partikelanzahl und Stickoxid -Reduktion effektiv funktionieren. Die bestehenden Euro 6a-Systeme mit einer Stickoxid-Speicherkatalysator/Dieselpartikelfilter-Kombination weisen aber zum Teil zu wenig Stickoxid-Speicherkapazität auf, um bei allen Betriebszuständen effektiv Stickoxid zu reduzieren. Das kann zwar im Prinzip durch ein größeres Volumen des Stickoxid-Speicherkatalysators sichergestellt werden. Oftmals ist aber kein Bauraum für eine Volumenvergrößerung vorhanden. Dies gilt umso mehr, als zusätzlich eine H₂S-Sperrfunktion unterzubringen ist.

Es besteht somit Bedarf an einem Katalysator bzw. einer Stickoxid-Speicherkatalysator/Dieselpartikelfilter-Kombination, die ausreichend Stickoxid-Speicherkapazität aufweist, eine H₂S-Sperrfunktion aufweist und die mit dem zur Verfügung stehenden Bauraum auskommt.

Es wurde nun gefunden, dass das geschilderte Problem gelöst wird, indem man sowohl den Stickoxid-Speicherkatalysator, als auch den H₂S-Sperrkatalysator auf einen Partikelfilter aufbringt.

Die vorliegende Erfindung betrifft einen Katalysator, der ein Wandflussfilter der Länge L und Materialzonen A und B umfasst,
wobei Materialzone A Ceroxid, eine Erdalkaliverbindung und/oder eine Alkaliverbindung, sowie Platin und/oder Palladium und
Materialzone B eine Manganverbindung, sowie Platin und/oder Palladium enthalten.

In Ausführungsformen der vorliegenden Erfindung ist das Ceroxid in Materialzone A handelsüblicher Qualität, d.h. es weist einen Ceroxid-Anteil von 90 bis 100 Gew.-% auf.
Es wird normalerweise in Mengen von 10 bis 80 g/l, bezogen auf das Volumen des Wandflussfilters, eingesetzt.

In weiteren Ausführungsformen der vorliegenden Erfindung umfasst Materialzone A Platin und Palladium. Das Masseverhältnis Platin zu Palladium liegt dann üblicherweise bei 2:1 bis 20:1, beispielsweise 4:1 bis 18:1 oder 6:1 bis 16:1, beispielsweise 8:1, 10:1, 12:1 oder 14:1. Die Beladungsmenge von Platin und Palladium beträgt üblicherweise 10 bis 100 g/ft³ (entspricht 0,35 bis 3,5 g/l) gerechnet als Summe von Platin und Palladium und bezogen auf das Volumen des Wandflussfilters.

Die Materialzone A kann darüber hinaus als weiteres Edelmetall Rhodium enthalten. Rhodium liegt in diesen Fällen insbesondere in Mengen von 0,1 bis 10 g/ft³ (entspricht 0,003 bis 0,35 g/l), bezogen auf das Volumen des Wandflussfilter, vor.

Üblicherweise liegen in der Materialzone A die Edelmetalle Platin und Palladium und gegebenenfalls Rhodium auf geeigneten Trägermaterialien vor. Als Trägermaterialien kommen alle dem Fachmann für diesen Zweck geläufigen Materialien in Betracht. Solche Materialien weisen eine BET-Oberfläche von 30 bis 250 m²/g, bevorzugt von 100 bis 200 m²/g auf (bestimmt nach DIN 66132) und sind insbesondere Aluminiumoxid, Siliziumoxid, Magnesiumoxid, Titanoxid, Ceroxid, sowie Mischungen oder Mischoxide von mindestens zwei dieser Materialien.
Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.
Sofern Aluminiumoxid oder stabilisiertes Aluminiumoxid verwendet wird, so liegt es in Mengen von 10 bis 80 g/l, bezogen auf das Volumen des Wandflussfilters, vor.

In weiteren Ausführungsformen der vorliegenden Erfindung enthält Materialzone A als Erdalkaliverbindung Oxide, Carbonate und/oder Hydroxide von Magnesium, Strontium und/oder Barium, besonders Magnesiumoxid, Bariumoxid und/oder Strontiumoxid.
Als Alkaliverbindung in der Materialzone A kommen insbesondere Oxide, Carbonate und/oder Hydroxide von Lithium, Kalium und/oder Natrium in Frage.

Üblicherweise liegt die Erdalkali- bzw. Alkaliverbindung in Mengen von 5 bis 50 g/l, besonders 15 bis 20 g/l, berechnet als Erdalkali- bzw. Alkalioxid, bezogen auf das Volumen des Wandflussfilters, vor.

Bevorzugt umfasst Materialzone A 5 bis 30 g/l Bariumoxid und 2 bis 15 g/l Magnesiumoxid, jeweils bezogen auf das Volumen des Wandflussfilters.

In weiteren Ausführungsformen der vorliegenden Erfindung beträgt die gesamte Beladungsmenge von Materialzone A 50 bis 160 g/l, bezogen auf das Volumen des Wandflussfilters, vor.

In weiteren Ausführungsformen der vorliegenden Erfindung umfasst Materialzone A zwei hinsichtlich Zusammensetzung und Beladungsmenge unterschiedliche Materialzonen A1 und A2. Insbesondere enthält in diesem Fall Materialzone A1 Ceroxid, eine Erdalkaliverbindung und/oder eine Alkaliverbindung, sowie Platin und/oder Palladium, während Materialzone A2 Ceroxid, sowie Platin und/oder Palladium enthält und frei ist von Erdalkali- und Alkaliverbindungen.
In einer Variante dieser Ausführungsform beträgt das Verhältnis von Ceroxid in Materialzone A2 zu Ceroxid in Materialzone A1, gerechnet jeweils in g/l und bezogen auf das Volumen des Wandflussfilters, 1:5 bis 3:1. Die gesamte Beladungsmenge, d.h. die Summe der Beladungsmengen von Materialzonen A1 und A2 beträgt aber auch in dieser Variante 50 bis 160 g/l, bezogen auf das Volumen des Wandflussfilters.

In weiteren Ausführungsformen der vorliegenden Erfindung enthält Materialzone B als Manganverbindung Manganoxid. Manganoxid wird normalerweise in Mengen von 5 bis 15 g/l, berechnet als MnO₂ und bezogen auf das Volumen des Wandflussfilters, eingesetzt.

In weiteren Ausführungsformen der vorliegenden Erfindung umfasst Materialzone B Platin und Palladium. Das Masseverhältnis Platin zu Palladium liegt dann üblicherweise bei 2:1 bis 20:1, beispielsweise 4:1 bis 18:1 oder 6:1 bis 16:1, beispielsweise 8:1, 10:1, 12:1 oder 14:1. Bevorzugt enthält Materialzone neben Platin und Palladium auch Rhodium. In diesem Fall beträgt das Masseverhältnis Platin zu Palladium zu Rhodium beispielsweise 19,2 : 1,6 : 3.
Die Beladungsmenge von Platin, Palladium und Rhodium in Materialzone beträgt üblicherweise 5 bis 40 g/ft³ (entspricht 0,175 bis 1,4 g/l) gerechnet als Summe von Platin, Palladium und Rhodium und bezogen auf das Volumen des Wandflussfilters.

Wie in Materialzone A liegen auch in der Materialzone B die Edelmetalle Platin, Palladium und Rhodium auf geeigneten Trägermaterialien vor. Diese entsprechen den bereits oben beschriebenen Trägermaterialien.
Sofern als Trägermaterial in Materialzone B Aluminiumoxid oder stabilisiertes Aluminiumoxid verwendet wird, so liegt es in Mengen von 5 bis 15 g/l, bezogen auf das Volumen des Wandflussfilters, vor.

In weiteren Ausführungsformen der vorliegenden Erfindung enthält Materialzone B Ceroxid in Mengen von bis zu 20 g/l, beispielsweise 2 bis 10 g/l, bezogen auf das Volumen des Wandflussfilters.

In weiteren Ausführungsformen der vorliegenden Erfindung enthält Materialzone B beta-Zeolith in Mengen von 5 bis 20 g/l, beispielsweise 10 bis 15 g/l, bezogen auf das Volumen des Wandflussfilters.

In weiteren Ausführungsformen der vorliegenden Erfindung beträgt die gesamte Beladungsmenge von Materialzone B 10 bis 40 g/l, bezogen auf das Volumen des Wandflussfilters, vor.

Die Materialzonen A und B können auf dem Wandflussfilter in verschiedenen Weisen angeordnet sein.

In einer Ausführungsform der vorliegenden Erfindung liegt Materialzone A ausgehend von einem Ende des Wandflussfilters auf 20 bis 100 %, insbesondere 40 bis 60 %, der Länge L des Wandflussfilters vor. Materialzone B liegt ausgehend vom anderen Ende des Wandflussfilters ebenfalls auf 20 bis 100 %, insbesondere 40 bis 60 %, der Länge L des Wandflussfilters vor.
Sofern sich die Materialzonen A und B überschneiden, so ist insbesondere Materialzone A über Materialzone B angeordnet.

In einer bevorzugten Ausführungsform der vorliegenden Erfindung gilt aber L = L_{A} + L_{B}, wobei L die Gesamtlänge des Wandflussfilters, L_{A} die Länge der Materialzone A und L_{B} die Länge der Materialzone B bedeutet. In diesem Fall befindet sich Materialzone A ausgehend von einem Ende des Wandflussfilters auf einem Teil der Länge L und Materialzone B auf dem Rest der Länge L bis zum anderen Ende des Wandflussfilters.
So sind beispielsweise beide Materialzonen auf je 50% der Länge L des Wandflussfilters angeordnet.
Es kann aber auch L < L_{A} + L_{B} gelten. In diesem Fall überlappen sich die Materialzonen A und B. Oder es kann L > L_{A} + L_{B} gelten, wenn ein Teil des Wandflussfilters frei von Materialzonen A und B bleibt.

Der erfindungsgemäße Katalysator umfasst einen Wandflussfilter. Im Unterschied zu einem Durchflusssubstrat, bei dem sich an beiden Enden offene Kanäle parallel zwischen seinen beiden Enden erstrecken, sind die Kanäle im Wandflussfilter abwechselnd entweder am ersten oder am zweiten Ende gasdicht verschlossen. Gas, das an einem Ende in einen Kanal eintritt, kann somit den Wandflussfilter nur dann wieder verlassen, wenn es durch die Kanalwand in einen Kanal eintritt, der am anderen Ende offen ist. Die Kanalwände sind üblicherweise porös und weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.
In der Regel sind die Poren des Wandflussfilters sogenannte offene Poren, das heißt sie haben eine Verbindung zu den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

In Ausführungsformen der vorliegenden Erfindung liegen die Materialzonen A und B auf den porösen Kanalwänden des Wandflussfilters vor. Wenn beispielsweise Materialzone A auf den Wänden der Kanäle vorliegt, die am ersten Ende des Wandflussfilters offen und am zweiten Ende geschlossen sind, so kann Materialzone B auf den Wänden der Kanäle vorliegt, die am zweiten Ende des Wandflussfilters offen und am ersten Ende geschlossen sind. Wie schon oben beschrieben kann in diesem Fall sowohl Materialzone A, als auch Materialzone B auf der gesamten Länge L des Wandflussfilters vorliegen oder nur auf einem Teil davon.

In anderen Ausführungsformen liegt mindestens eine der beiden Materialzonen A und B in den porösen Wänden des Wandflussfilters. Beispielsweise befindet sich Materialzone A in den porösen Wänden und Materialzone B auf den Wänden der Kanäle, die am zweiten Ende des Wandflussfilters offen und am ersten Ende geschlossen sind. Oder Materialzone B befindet sich in den porösen Wänden und Materialzone A auf den Wänden der Kanäle, die am ersten Ende des Wandflussfilters offen und am zweiten Ende geschlossen sind. Es ist selbstverständlich auch möglich, dass sich beide Materialzonen A und B in den porösen Wänden befinden.

Die Aufbringung der katalytisch aktiven Materialzonen A und B auf den Wandflussfilter erfolgt mit Hilfe entsprechender Beschichtungssuspensionen (Washcoat) nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.
Im Übrigen ist dem Fachmann bekannt, dass im Falle von Wandflussfiltern deren durchschnittliche Porengröße und die mittlere Teilchengröße der in den Beschichtungssuspensionen zur Herstellung der Materialzonen A und B enthaltenen Teilchen so aufeinander abgestimmt werden können, dass die Materialzonen A und/oder B auf den porösen Wänden, die die Kanäle des Wandflussfilters bilden, liegen (auf-Wand-Beschichtung). Alternativ werden sie so gewählt, dass sich die Materialzonen A und B in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße klein genug sein, um in die Poren des Wandflussfilters eindringen zu können.

Wandflussfilter, die gemäß vorliegender Erfindung verwendet werden können, sind bekannt und am Markt erhältlich. Sie bestehen beispielsweise aus Silicium-Carbid, Aluminium-Titanat oder Cordierit.

Die erfindungsgemäßen Katalysatoren eignen sich in hervorragender Weise zur Konvertierung von NOₓ in Abgasen von Kraftfahrzeugen, die mit mager betriebenen Motoren, etwa Dieselmotoren, betrieben werden. Sie erreichen eine gute NOx-Konvertierung bei Temperaturen von circa 200 bis 450°C, ohne dass sie bei hohen Temperaturen negativ beeinflusst wird. Gleichzeitig wird verhindert, dass Schwefelwasserstoff in die Atmosphäre gelangen kann. Die erfindungsgemäßen Stickoxid-Speicherkatalysatoren sind somit für Euro 6 Anwendungen geeignet.

Die vorliegende Erfindung betrifft somit auch ein Verfahren zur Konvertierung von NOₓ in Abgasen von Kraftfahrzeugen, die mit mager betriebenen Motoren, etwa Dieselmotoren, betrieben werden, das dadurch gekennzeichnet ist, dass das Abgas über einen erfindungsgemäßen Katalysator geleitet wird.
Der erfindungsgemäße Katalysator ist dabei so im Abgasstrom anzuordnen, dass Materialzone A zuerst mit dem Abgas in Berührung kommt. Mit anderen Worten, Materialzone A ist anströmseitig und Materialzone B abströmseitig anzuordnen.

### Beispiel 1

a) Zur Herstellung eines erfindungsgemäßen Katalysators wird ein handelsüblicher wabenförmiger Wandflussfilter aus Cordierit (Porosität 50-59%, mittlere Porengröße 12-14 µm) auf 50 % seiner Länge mit einer Materialzone A beschichtet, die 34,7 g/l Ceroxid, 12,6 g/l Bariumoxid, 6,3 g/l Magnesiumoxid und 1,4 g/l Platin und Palladium im Verhältnis 12:1, geträgert auf 34,3 g/l eines Lanthan-dotierten Aluminiumoxids enthält Dazu wird ein entsprechender Washcoat auf pH 7-9 eingestellt und die Korngröße per Mahlen in einer Kugelmühle auf einen d₉₉< 7µm eingestellt und dann wie üblich auf 50% der Länge beschichtet. Anschließend wird getrocknet und bei 550°C kalziniert.
   Die Gesamtbeladung der Materialzone A beträgt 90 g/l bezogen auf das Volumen des Wandflussfilters. Materialzone A befindet sich in den porösen Wänden des Wandflussfilters (in-Wand-Beschichtung)
b) Der gemäß a) beschichtete Wandflussfilter wird auf den noch unbeschichteten 50% seiner Länge mit einer Materialzone B beschichtet, die

12 g/l Manganoxid (gerechnet als MnO₂), 5g/l Ceroxid und 0,833 g/l Platin, Palladium und Rhodium im Verhältnis 19,2:1,6:3, geträgert auf 10,5 g/l eines Lanthan-dotierten Aluminiumoxids enthält
Dazu wird ein entsprechender Washcoat auf pH 7-9 eingestellt und die Korngröße per Mahlen in einer Kugelmühle auf einen d₉₉< 7µm eingestellt und dann der Wandflussfilter auf den verbleibenden 50% seiner Länge beschichtet. Anschließend wird getrocknet und bei 550°C kalziniert.
Die Gesamtbeladung der Materialzone B beträgt 27 g/l bezogen auf das Volumen des Wandflussfilters. Auch Materialzone B befindet sich in den porösen Wänden des Wandflussfilters (in-Wand-Beschichtung)

## Patentansprüche

1. Katalysator, der ein Wandflussfilter der Länge L und Materialzonen A und B umfasst,
wobei Materialzone A Ceroxid, eine Erdalkaliverbindung und/oder eine Alkaliverbindung, sowie Platin und/oder Palladium und
Materialzone B eine Manganverbindung, sowie Platin und/oder Palladium enthalten.

2. Katalysator gemäß Anspruch 1, **dadurch gekennzeichnet, dass** Materialzone A Ceroxid in Mengen von 10 bis 80 g/l, bezogen auf das Volumen des Wandflussfilters, enthält.

3. Katalysator gemäß Anspruch 1 und/oder 2, **dadurch gekennzeichnet, dass** Materialzone A Platin und Palladium enthält.

4. Katalysator gemäß einem oder mehreren der Ansprüche 1 bis 3, **dadurch gekennzeichnet, dass** Materialzone A Rhodium enthält.

5. Katalysator gemäß einem oder mehreren der Ansprüche 1 bis 4, **dadurch gekennzeichnet, dass** Materialzone A Magnesiumoxid, Bariumoxid und/oder Strontiumoxid enthält.

6. Katalysator gemäß einem oder mehreren der Ansprüche 1 bis 5, **dadurch gekennzeichnet, dass** Materialzone A 5 bis 30 g/l Bariumoxid und 2 bis 15 g/l Magnesiumoxid, jeweils bezogen auf das Volumen des Wandflussfilters, enthält.

7. Katalysator gemäß einem oder mehreren der Ansprüche 1 bis 6, **dadurch gekennzeichnet, dass** die gesamte Beladungsmenge von Materialzone A 50 bis 160 g/l, bezogen auf das Volumen des Wandflussfilters, beträgt.

8. Katalysator gemäß einem oder mehreren der Ansprüche 1 bis 7, **dadurch gekennzeichnet**, das Materialzone A zwei hinsichtlich Zusammensetzung und Beladungsmenge unterschiedliche Materialzonen A1 und A2 umfasst.

9. Katalysator gemäß Anspruch 8, **dadurch gekennzeichnet, dass** Materialzone A1 Ceroxid, eine Erdalkaliverbindung und/oder eine Alkaliverbindung, sowie Platin und/oder Palladium enthält und Materialzone A2 Ceroxid, sowie Platin und/oder Palladium enthält und frei ist von Erdalkali- und Alkaliverbindungen.

10. Katalysator gemäß einem oder mehreren der Ansprüche 1 bis 9, **dadurch gekennzeichnet, dass** Materialzone B als Manganverbindung Manganoxid enthält.

11. Katalysator gemäß Anspruch 10, **dadurch gekennzeichnet, dass** Manganoxid in Mengen von 5 bis 15 g/l, berechnet als MnO₂ und bezogen auf das Volumen des Wandflussfilters, enthalten ist.

12. Katalysator gemäß einem oder mehreren der Ansprüche 1 bis 11, **dadurch gekennzeichnet, dass** Materialzone B Platin, Palladium und Rhodium enthält.

13. Katalysator gemäß einem oder mehreren der Ansprüche 1 bis 12, **dadurch gekennzeichnet, dass** Materialzone B Ceroxid enthält.

14. Katalysator gemäß einem oder mehreren der Ansprüche 1 bis 13, **dadurch gekennzeichnet, dass** die gesamte Beladungsmenge von Materialzone B 10 bis 40 g/l, bezogen auf das Volumen des Wandflussfilters, beträgt.

15. Katalysator gemäß einem oder mehreren der Ansprüche 1 bis 14, **dadurch gekennzeichnet, dass** Materialzone A ausgehend von einem Ende des Wandflussfilters auf 20 bis 100 % der Länge L des Wandflussfilters und Materialzone B ausgehend vom anderen Ende des Wandflussfilters auf 20 bis 100 % der Länge L des Wandflussfilters vorliegt.

16. Verfahren zur Konvertierung von NOₓ in Abgasen von Kraftfahrzeugen, die mit mager betriebenen Motoren betrieben werden, **dadurch gekennzeichnet ist, dass** das Abgas über einen Katalysator gemäß einem oder mehreren der Ansprüche 1 bis 15 geleitet wird.
